# EUROPEAN PATENT APPLICATION

(11) **EP 4 203 442 A1**
(43) Date of publication of application: **28.06.2023**
(21) Application number: 22211790.5
(22) Date of filing: 06.12.2022
(51) Int. Cl.: H04L 67/12, B60W 50/08, G06N 20/00

(54) **ON-BOARD DATA PROCESSING METHOD AND DEVICE, ELECTRONIC DEVICE AND STORAGE MEDIUM**

(30) Priority: 24.12.2021 CN 202111595724
(71) Applicant: BEIJING BAIDU NETCOM SCIENCE AND TECHNOLOGY CO. LTD., 100085 Beijing (CN)
(72) Inventor: YAN, Jingang, BEIJING, 100085 (CN); HU, Bin, BEIJING, 100085 (CN); ZHAN, Bo, BEIJING, 100085 (CN); BI, Guiguan, BEIJING, 100085 (CN); CHEN, Hanchuan, BEIJING, 100085 (CN)
(74) Representative: Bringer IP

(57) **Abstract**

The present disclosure provides an on-board data processing method and device, an electronic device and a storage medium, which relates to a field of artificial intelligence technology, and in particular, to fields of Internet of Things, autonomous parking, automatic driving and the like. A specific implementation solution is as follows: comparing (S201) collected user behavior data with on-board data, to obtain difference data used to characterize scene data that is related to user behavior and not included in the on-board data; reporting (S202) the difference data; and updating (S203) the on-board data by using a downloaded data package obtained through the difference data, in response to a data update operation. By adopting the present disclosure, the accuracy of driving in the automatic driving scene may be improved.

## Description

### TECHNICAL FIELD

The present disclosure relates to a field of artificial intelligence technology, and in particular, to fields of Internet of Things, autonomous parking, automatic driving and the like.

### BACKGROUND

With the development of technology, performance optimization of software/hardware may be realized through artificial intelligence, which is applicable to a variety of application scenarios. For example, artificial intelligence technology may be used in the software/hardware design involving application scenarios such as autonomous parking and automatic driving, so as to improve the processing speed and accuracy of software/hardware.

Taking automatic driving as an example, the collection of on-board data needs to cover various aspects of the real scene. However, the actual situation is that the data collected by a special collection vehicle is not comprehensive, not only costly, but also inaccurate. In other words, whether the data containing various real scene features is comprehensive or not, whether the data is accurate enough, will affect the processing speed and accuracy of software/hardware. For example, it will affect the accuracy of driving in automatic driving scenes, resulting in potential safety hazards.

### SUMMARY

The present disclosure provides an on-board data processing method and device, an electronic device and a storage medium.

According to one aspect, provided is an on-board data processing method, including: comparing collected user behavior data with on-board data, to obtain difference data used to characterize scene data that is related to user behavior and not included in the on-board data; reporting the difference data; and updating the on-board data by using a downloaded data package obtained through the difference data, in response to a data update operation.

According to another aspect, provided is an on-board data processing device, including: a comparing unit configured to compare collected user behavior data with on-board data, to obtain difference data used to characterize scene data that is related to user behavior and not included in the on-board data; a reporting unit configured to report the difference data; and a data updating unit configured to update the on-board data by using a downloaded data packet obtained through the difference data, in response to a data update operation.

According to another aspect, provided is an electronic device, including: at least one processor; and a memory connected in communication with the at least one processor. The memory stores instructions executable by the at least one processor, and the instructions are executed by the at least one processor to enable the at least one processor to execute any one of the methods provided by embodiments of the present disclosure.

According to another aspect of the present disclosure, provided is a non-transitory computer-readable storage medium storing computer instructions thereon. The computer instructions are used to enable a computer to execute any one of the methods provided by embodiments of the present disclosure.

According to another aspect of the present disclosure, provided is a computer program product including a computer program. The computer program implements any one of the methods provided by embodiments of the present disclosure when executed by a processor.

By adopting the present disclosure, the collected user behavior data is compared with the on-board data to obtain the difference data, and the difference data is used to characterize the scene data that is related to the user behavior and not included in the on-board data. The difference data is reported, and the on-board data is updated by using the downloaded data package obtained through the difference data, in response to the data update operation. By adopting the present disclosure, the accuracy of driving in the automatic driving scene may be improved.

It should be understood that the content described in this part is not intended to identify crucial or important features of embodiments of the present disclosure, or to limit the scope of the present disclosure. Other features of the present disclosure will be easily understood from the following description.

### BRIEF DESCRIPTION OF THE DRAWINGS

The accompanying drawings are used to better understand the present solution, and do not constitute a limitation to the present disclosure.
FIG. 1 is a schematic diagram of an application scenario of communication between a vehicle and a Cloud platform according to embodiments of the present disclosure.
FIG. 2 is a flowchart of an on-board data processing method according to embodiments of the present disclosure.
FIG. 3 is a schematic diagram of an on-board data processing framework in an application example according to embodiments of the present disclosure.
FIG. 4 is a structural diagram of an on-board data processing device according to embodiments of the present disclosure.
FIG. 5 is a block diagram of an electronic device for implementing an on-board data processing method according to embodiments of the present disclosure.

### DETAILED DESCRIPTION

Exemplary embodiments of the present disclosure are described below with reference to the accompanying drawings, in which various details of the embodiments of the present disclosure are included to facilitate understanding, and should be considered as merely exemplary. Therefore, various changes and modifications may be made to the embodiments described herein by those of ordinary skill in the art without departing from the scope and spirit of the present disclosure. Likewise, for clarity and conciseness, descriptions of well-known functions and structures are omitted in the following description.

The term "and/or" herein is only used to describe an association relation of associated objects, indicating that there may be three kinds of relations, for example, A and/or B may mean only A, both A and B, and only B. The term "at least one" herein means any combination of any one or at least two of associated listed items, for example, the expression "including at least one of A, B, and C" may mean including any one or more elements selected from the set of A, B, and C. The term "first", "second", and the like herein refer to a plurality of similar technical terms and are used to distinguish these terms without limitation to an order of these terms or to only two terms. For example, a first feature and a second feature refer to two kinds of features or two features, the first feature may be one or more, and the second feature may also be one or more.

In addition, in order to better illustrate the present disclosure, numerous specific details are given in the following detailed description. Those having ordinary skill in the art should understand that the present disclosure may be performed without certain specific details. In some instances, methods, means, elements and circuits well known to those skilled in the art are not described in detail in order to highlight the subject matter of the present disclosure.

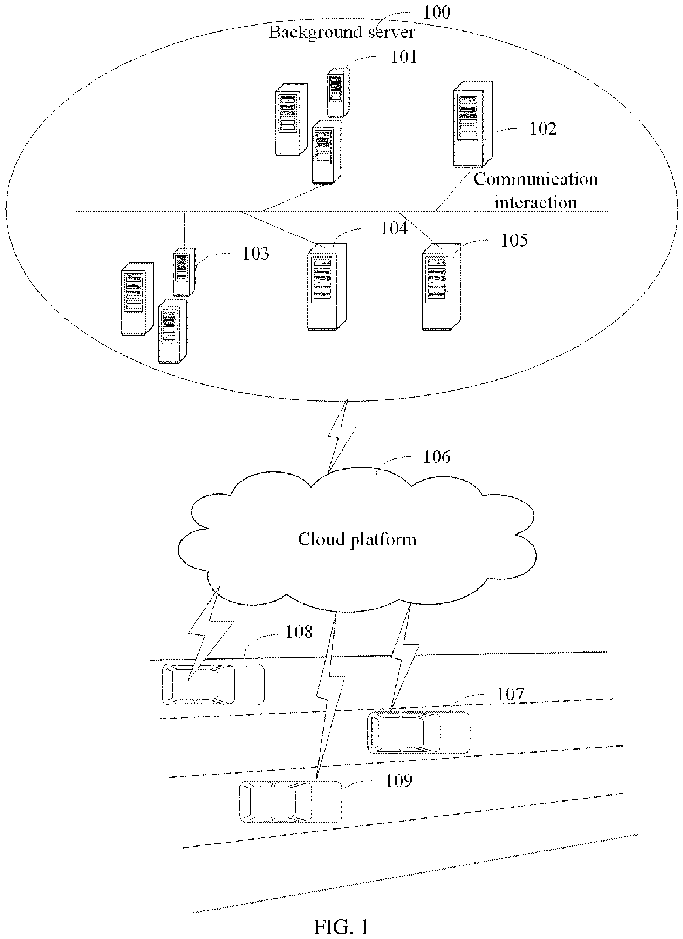

According to embodiments of the present disclosure, FIG. 1 is a schematic diagram of an application scenario of communication between a vehicle and a Cloud platform according to embodiments of the present disclosure, and the application scenario includes a background server 100, a plurality of vehicles (such as vehicles 107 to 109), and "Cloud platform" 106 for communication between the background server 100 and the plurality of vehicles. A distributed cluster system may be used in the background server. It is exemplary to describe that the distributed cluster system may be used for model training based on the difference data reported by the plurality of vehicles. As shown in FIG. 1, the distributed cluster system includes a plurality of nodes (such as a server cluster 101, a server 102, a server cluster 103, a server 104 and a server 105), and the plurality of nodes may jointly perform one or more model training tasks. Alternatively, the plurality of nodes in the distributed cluster system may perform the model training task based on the same training method, or the plurality of nodes may perform the model training task based on different training methods. Alternatively, after the model training is finished once, the plurality of nodes may exchange data (such as data synchronization).

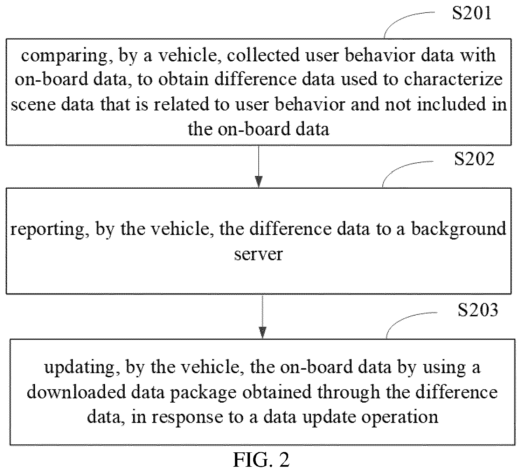

According to embodiments of the present disclosure, provided is an on-board data processing method. FIG. 2 is a flowchart of an on-board data processing method according to embodiments of the present disclosure. The method may be applied to an on-board data processing device. For example, when the device may be deployed in a terminal, a server or other processing device in a single machine, multi-machine or cluster system, the on-board data processing and other processing may be realized. In an example, the terminal may be User Equipment (UE), a mobile device, Personal Digital Assistant (PDA), a handheld device, a computing device, an on-board device, a wearable device, and the like. In some possible implementations, the method may be implemented in a manner that a processor calls computer-readable instructions stored in a memory. As shown in FIG. 2, the method includes the followings.

S201, comparing, by a vehicle, collected user behavior data with on-board data to obtain difference data used to characterize scene data that is related to user behavior and not included in the on-board data.

S202, reporting, by the vehicle, the difference data to a background server.

S203, updating, by the vehicle, the on-board data by using a downloaded data package obtained through the difference data, in response to a data update operation.

In an example of S201-S203, the vehicle may be an autonomous driving vehicle, including an automatic driving vehicle or other vehicles with intelligent driving. The autonomous driving vehicle may collect the user behavior data in any vehicle mode (such as a vehicle driving state or an autonomous parking state) through the above automatic collection method. The vehicle compares the collected user behavior data with the on-board data (such as model output data obtained by using the automatic driving model) to obtain the difference data (the difference data is used to characterize the scene data that is related to the user behavior and not included in the model output data). The vehicle reports the difference data to the background server, so that the background server may use the difference data as training sample data (or use the difference data to improve the existing training sample database) to train the automatic driving model, and obtain the updated model after training. After obtaining the updated model, the data update operation may be triggered. In response to the data update operation, the vehicle may update the on-board data through the downloaded data packet obtained from the background server (such as the updated model obtained after training or the updated data directly obtained based on the updated model).

By adopting the present disclosure, the collected user behavior data may be compared with the on-board data to obtain the difference data. Since the difference data may characterize the scene data that is related to the user behavior and not included in the on-board data, after reporting the difference data to the background server, the background server may perform model training to the automatic driving model based on the difference data, and obtain the updated model after training. After responding to the data update operation, the download data package obtained from the difference data is downloaded from the background server to update the on-board data. Since the updated model has more comprehensive scene data and better performance than the previous automatic driving model, the accuracy of driving in the automatic driving scene is improved, and potential safety hazard(s) is prevented.

In one exemplary implementation, that compare the collected user behavior data with the on-board data to obtain the difference data includes the followings. A decision is made based on the on-board data (such as the model output data obtained by using the automatic driving model), in the vehicle driving state, to obtain first decision data (such as first decision data obtained based on a first decision). In the case where it is recognized that, in the vehicle driving state, there is an obstacle around the vehicle, first user behavior data (such as first user behavior data obtained based on a second decision, which is different from the first decision in this implementation) is collected, and comparison is performed, that is, when the first user behavior data does not match the first decision data, the first user behavior data and/or data associated with the first user behavior data (such as current environment information and/or driving status information) is determined as the difference data. With this implementation, when the automatic driving model cannot identify obstacles (such as whether there are people or things suddenly breaking into the vehicle driving road, whether there are other vehicles trying to change from the current lane of the vehicle driving road to other lanes, etc.), real user behavior data (i.e. first user behavior data obtained from a decision different from the decision of the automatic driving model) may be automatically collected, and there is no need to equip a special collection vehicle to collect data, which reduces the cost. Moreover, the real user behavior data and/or the data associated with the real user behavior data are determined as the above difference data, and thus the automatic driving model may be better improved later. The updated model obtained after improving the automatic driving model may be deployed to the vehicle, and thus it is bound to improve the accuracy of driving in the automatic driving scene, and potential safety hazard(s) is prevented.

In one exemplary implementation, that compare the collected user behavior data with the on-board data (such as the model output data obtained by using the automatic driving model) to obtain the difference data includes the followings. A decision is made based on the on-board data, in an autonomous parking state, to obtain second decision data (such as second decision data obtained based on a second decision). In the case where it is recognized that, in the autonomous parking state, there is a parking space, the second user behavior data (such as second user behavior data obtained based on a third decision, which is different from the second decision in this implementation) is collected, and comparison is performed, that is, when the second user behavior data does not match the second decision data, the second user behavior data and/or data associated with the second user behavior data (such as current environmental information and/or driving status information) is determined as the difference data. With this implementation, when the parking space cannot be identified by using the automatic driving model (e.g., there is a parking space in the parking lot, and the user may park independently, but the automatic driving model cannot identify the parking space and give an independent parking decision), real user behavior data (i.e., second user behavior data obtained by a decision different from the decision of the automatic driving model) may be automatically collected, and there is no need to equip a special collection vehicle to collect data, which reduces the cost. Moreover, the real user behavior data and/or the data associated with the real user behavior data are determined as the above difference data, and thus the automatic driving model may be better improved later. The updated model obtained after improving the automatic driving model may be deployed to the vehicle, and thus it is bound to improve the accuracy of driving in the automatic driving scene, and potential safety hazard(s) is prevented.

In one exemplary implementation, that report the difference data includes: deleting information used to identify user and/or vehicle identity from the difference data, to obtain target data, and uploading the target data; or deleting information used to identify user and/or vehicle identity from the difference data and encrypting the difference data after deleting, to obtain target data, and uploading the target data. With this implementation, considering the information security of the user and/or vehicle, the difference data is preprocessed (e.g., deletion processing, encryption processing, etc.) and then uploaded, which improves the security of information transmission and protects user's privacy.

In one exemplary implementation, the method further includes: receiving user prompt information, in the case where an updated model is obtained by performing model training based on the difference data; and triggering the data update operation according to the user prompt information. With this implementation, the user (such as the owner of an automatic driving vehicle) may be prompted to update the data through the user prompt information, so that the user may know that the data has been updated at the first time, thereby reducing the delay of data update, improving the accuracy of driving in the automatic driving scene, and preventing potential safety hazard(s).

In one exemplary implementation, that update the on-board data by using the downloaded data package obtained through the difference data, in response to the data update operation, includes: loading the updated model to obtain updated data and updating the on-board data based on the updated data, in the case where the downloaded data package is the updated model; or updating, in the case where the downloaded data package is updated data obtained based on the updated model, the on-board data based on the updated data. With this implementation, the downloaded data package is various, that is, the downloaded data package may be the updated model or the updated data obtained based on the updated model. Therefore, different services may be customized according to user's requirement.

The on-board data processing method provided by embodiments of the present disclosure is illustratively described below.

In order to collect the sample data used for automatic driving model training, special collection vehicles may be equipped according to different user's requirement to collect the data of specific scenes, such as rain/snow weather, different types of places such as high-speed/underground parking lots, cars/tricycles/Bicycles/pedestrians/cones, etc., and then the sample data is manually marked for targeted model recognition training. The cost of equipping a special collection vehicle is very high. In fact, due to the limitation of cost, the sample data collected by the collection vehicle may not meet and cover the user's requirement of all scenes in human life, resulting in loss of several scenes since the automatic driving model obtained through training is limited by the scale of data collection and manually marking, and thus the real scene may be not infinitely achieved. The cost of data collection is high, and the data is incomplete and inaccurate, thereby seriously restricting the accuracy and recall of an automatic driving algorithm model. In the automatic driving scene, in order to improve the accuracy and recall of the automatic driving model, it is necessary to realize low-cost data collection, and the data needs to meet the user's requirement to adapt to various scenes.

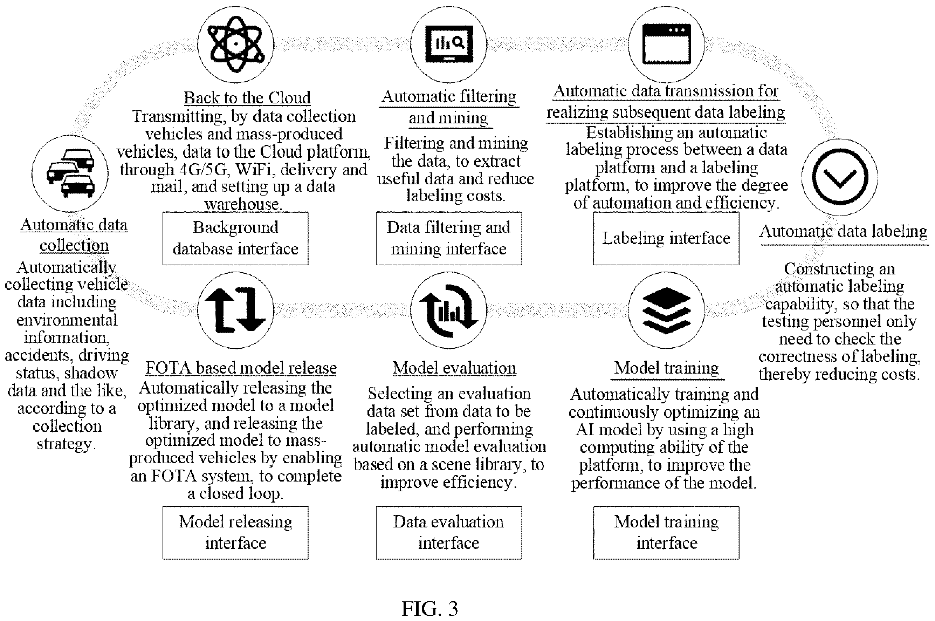

FIG. 3 is a schematic diagram of the on-board data processing framework in an application example according to embodiments of the present disclosure. In this application example, as shown in FIG. 3, in the process that the user (i.e. the owner of the autonomous vehicle) realizes automatic driving based on artificial intelligence technology, the background server may start the automatic driving simulation system, which may be deployed on the autonomous vehicle. When the user behavior is inconsistent with the decision of the automatic driving simulation system, the following operations are performed sequentially: automatic data collection -> back to the Cloud -> automatic data filtering and mining -> automatic machine learning and labeling (including automatically data transmission for realizing subsequent data labeling, and automatic data labeling) -> manual verification (optional, not shown in FIG. 3) -> automatic model training -> automatic model evaluation -> manual evaluation (optional, not shown in FIG. 3) -> releasing the model to the vehicle. The automatic collection and model training of large-scale generalization scenes are realized at a very low cost, so that the automatic driving model may infinitely close to the real world, mainly including the followings.
1), the owner gets on and starts the automatic driving vehicle, and the automatic driving simulation system in which the automatic driving model is deployed starts automatically.
2), the owner drives the vehicle manually. In one case, the vehicle encounters a football suddenly breaking from the roadside during the straight driving process, but the decision of the automatic driving model is set to go straight, and the obstacle (i.e., football) is not recognized. Therefore, the automatic driving model still outputs to keep the vehicle speed and continue to go straight. At this time, the owner takes emergency braking, the real behavior of the owner is quite different from the decision output by the automatic driving model, and thus the automatic driving system may capture this difference as the difference data. In another case, when the vehicle goes straight on the highway, the vehicle needs to change lanes to the left and the turn signal is turned on according to the prompt of the automatic driving simulation system. At this time, the owner sees from the rearview mirror that there is a rear vehicle suddenly accelerating at the left rear of the vehicle, that is, the vehicle may not change lanes to the left at this time, but the decision of the automatic driving model is set to change lanes to the left, and the obstacle (i.e., the rear vehicle) is not recognized, and thus the automatic driving model still outputs to change lanes to the left. At this time, the turn signal is turned on and the vehicle turns right. The real behavior of the owner is quite different from the decision output of the automatic driving model, and the automatic driving system may capture this difference as difference data. In still another case, the owner wants to park and looks for a parking space after entering the parking lot. There is a parking space on the right side of the car, but the decision of the automatic driving model is that the vehicle may not park independently and may not recognize the parking space. Therefore, the automatic driving model still outputs that the vehicle may not park independently. At this time, the owner directly parks independently in the parking space, the real behavior of the owner is quite different from the decision output of the automatic driving model, and thus the automatic driving system may capture this difference as the difference data.
3), after the automatic driving system automatically desensitizes the environmental information, driving status and other data when the above events occur in 2) (that is, considering personal information security and vehicle information security, it is necessary to delete the information related to personal information security and vehicle information security, and only retain the scene data related to the user), and automatically encrypt the data after the deleting processing (only the scene data related to the user will be retained for encryption), the encrypted data is automatically transmitted back to the automatic driving cloud training platform through the on-board network.
4), after filtering and mining the transmitted data (considering the large amount of the transmitted data, the transmitted data may contain some invalid data, such as non-key data irrelevant to improving the performance of the model training), the automatic driving cloud training platform extracts key data in the transmitted data (such as data of different scenes, classified data, multi-angle data such as front wide-angle data, and the like). The model training may be better improved through the key data and the key data may be automatically distributed to a data labeling platform.
5), the data labeling platform adopts a method of strengthening deep learning to perform an automatic labeling on the data first, and then performs manual rapid verification to improve the efficiency of manually labeling.
6), a large-scale AI training platform cluster in the Cloud platform is used to perform fully automated iterative training to the data, and the automatic driving model after a plurality of iterations is obtained (i.e. the updated model obtained by improving the automatic driving model).
7), data of a large-scale scene library is automatically loaded for the automatic driving model, automatic model evaluation is performed, and improvement of model performance is evaluated by evaluating the accuracy and recall of the model.
8), when the accuracy and recall of the automatic driving model are significantly improved, the automatic driving model is verified through a larger-scale real vehicle generalization test and released to an OTA remote upgrade system. A download package (such as the updated model and the updated data involved in the above implementations) may be downloaded to the automatic driving system in the vehicle through the OTA remote upgrade system. Thereafter, the vehicle receives the prompt information and triggers the data update operation, and 9) is then performed.
9), after detecting that there is an updated version of the model in the Cloud platform, the vehicle may remind the owner to confirm. After the owner confirms, the updated model may be automatically downloaded and deployed to the vehicle to improve the capability of automatic driving.

By adopting the present disclosure, the large number of vehicles running on the road are used fully, the difference between user behavior and automatic driving simulation system is used, and model training data is collected pertinently, thereby quickly improving the generalization ability of automatic driving model at very low cost and geometric speed, to improve the accuracy of driving in the automatic driving scene and prevent potential safety hazard(s).

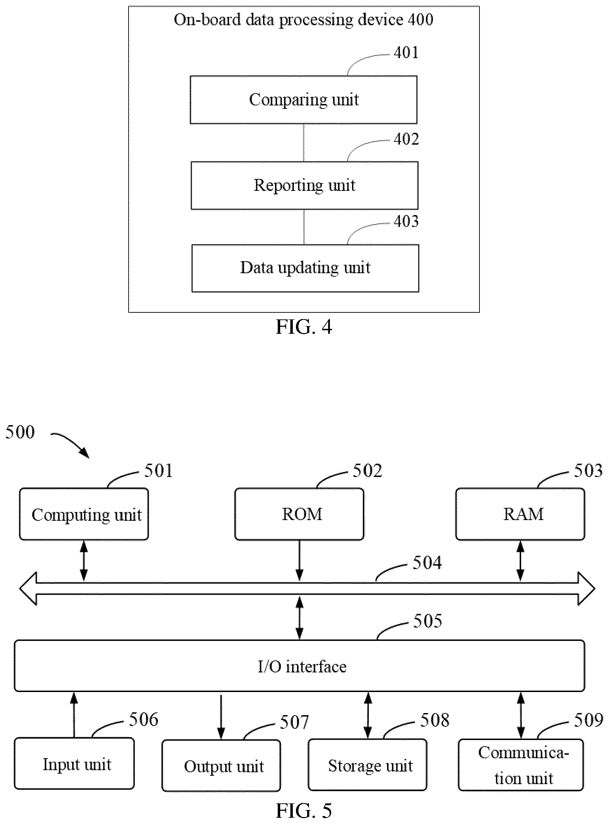

According to embodiments of the present disclosure, provided is an on-board data processing device. FIG. 4 is a structural diagram of the on-board data processing device according to embodiments of the present disclosure. As shown in FIG. 4, the on-board data processing device 400 includes: a comparing unit 401 configured to compare collected user behavior data with on-board data, to obtain difference data; a reporting unit 402 configured to report the difference data; and a data updating unit 403 configured to update the on-board data by using a downloaded data packet obtained through the difference data, in response to a data update operation. In an example, the difference data is used to characterize the scene data that is related to user behavior and not included in the on-board data.

In one exemplary implementation, the comparing unit is configured to: make a decision based on the on-board data, in a vehicle driving state, to obtain the first decision data; collect first user behavior data, in the case where it is recognized that, in the vehicle driving state, there is an obstacle around the vehicle; and determine the first user behavior data and/or the data associated with the first user behavior data as the difference data, in the case where it is determined by comparison that the first user behavior data does not match the first decision data.

In one exemplary implementation, the comparing unit is further configured to: make a decision based on the on-board data, in an autonomous parking state, to obtain the second decision data; collect second user behavior data, in the case where it is recognized that, in the autonomous parking state, there is a parking space; and determine the second user behavior data and/or the data associated with the second user behavior data as the difference data, in the case where it is determined by comparison that the second user behavior data does not match the second decision data.

In one exemplary implementation, the reporting unit is further configured to: delete information used to identify user and/or vehicle identity from the difference data, to obtain the target data, and upload the target data. Alternatively, the reporting unit is further configured to: delete information used to identify the user and/or vehicle identity from the difference data and encrypt the difference data after deleting, to obtain the target data, and upload the target data.

In one exemplary implementation, the on-board data processing device 400 further includes an information receiving unit configured to: receive user prompt information, in the case where an updated model is obtained by performing model training based on the difference data; and trigger the data update operation according to the user prompt information.

In one exemplary implementation, the data updating unit is further configured to: load the updated model to obtain updated data and update the on-board data based on the updated data, in the case where the downloaded data package is the updated model. Alternatively, the data updating unit is further configured to: update, in the case where the downloaded data package is updated data obtained based on the updated model, the on-board data based on the updated data.

In the technical solution of the present disclosure, collection, storage and application of user's personal information involved herein are all in compliance with the provisions of relevant laws and regulations, and do not violate public order and good customs.

According to embodiments of the present disclosure, the present disclosure also provides an electronic device, a readable storage medium and a computer program product.

FIG. 5 illustrates a schematic block diagram of an example electronic device 500 that may be used to implement embodiments of the present disclosure. Electronic devices are intended to represent various forms of digital computers, such as, laptops, desktops, workstations, personal digital assistants, servers, blade servers, mainframe computers, and other suitable computers. Electronic devices may also represent various forms of mobile devices, such as, personal digital processing, cellular phones, smart phones, wearable devices and other similar computing devices. Components shown herein, their connections and relationships as well as their functions are merely examples, and are not intended to limit the implementation of the present disclosure described and/or required herein.

As shown in FIG. 5, the electronic device 500 includes a computing unit 501 that may perform various appropriate actions and processes according to a computer program stored in a read only memory (ROM) 502 or a computer program loaded from a storage unit 508 into a random access memory (RAM) 503. In RAM 503, various programs and data required for the operation of the electronic device 500 may also be stored. The computing unit 501, ROM 502 and RAM 503 are connected each other through bus 504. The input/output (I/O) interface 505 is also connected to the bus 504.

A plurality of components in the electronic device 500 are connected to the I/O interface 505, and include an input unit 506 such as a keyboard, a mouse and the like, an output unit 507 such as various types of displays, speakers, and the like, a storage unit 508 such as a magnetic disk, an optical disk, and the like, and a communication unit 509 such as a network card, a modem, a wireless communication transceiver, and the like. The communication unit 509 allows the electronic device 500 to exchange information/data with other devices through computer networks such as Internet and/or various telecommunication networks.

The computing unit 501 may be various general-purpose and/or special-purpose processing components with processing and computing capabilities. Some examples of the computing unit 501 include, but are not limited to, a central processing unit (CPU), a graphics processing unit (GPU), various dedicated artificial intelligence (AI) computing chips, various computing units running machine learning model algorithms, digital signal processors (DSPS), and any appropriate processors, controllers, microcontrollers, and the like. The calculation unit 501 performs various methods and processes described above, such as an on-board data processing method. For example, in some implementations, the on-board data processing method may be implemented as a computer software program that is tangibly contained in a machine-readable medium, such as the storage unit 508. In some implementations, part or all of the computer program may be loaded and/or installed on the electronic device 500 via ROM 502 and/or the communication unit 509. When the computer program is loaded into RAM 503 and executed by the computing unit 501, one or more steps of the on-board data processing method described above may be performed. Alternatively, in other implementations, the computing unit 501 may be configured to perform the on-board data processing method by any other suitable means (e.g., by means of firmware).

Various implementations of the systems and technologies described above in this paper may be implemented in a digital electronic circuit system, an integrated circuit system, a field programmable gate array (FPGA), an application specific integrated circuit (ASIC), an application specific standard product (ASSP), a system on chip (SOC), a load programmable logic device (CPLD), a computer hardware, firmware, software, and/or combinations thereof. These various implementations may include being implemented in one or more computer programs that may be executed and/or interpreted on a programmable system including at least one programmable processor. the programmable processor may be a dedicated or general-purpose programmable processor, may receive data and instructions from a storage system, at least one input device, and at least one output device, and transmit data and instructions to the storage system, the at least one input device, and the at least one output device.

The program code for implementing the methods of the present disclosure may be written in any combination of one or more programming languages. These program codes may be provided to the processor or controller of general-purpose computer, special-purpose computer or other programmable data processing device, so that when executed by the processor or controller, the program code enables the functions/operations specified in the flow chart and/or block diagram to be implemented. The program code may be executed completely on a machine, partially on a machine, partially on a machine and partially on a remote machine, or completely on a remote machine or server as a separate software package.

In the context of the present disclosure, the machine-readable medium may be a tangible medium that may contain or store a program for use by or in combination with an instruction execution system, device or device. The machine-readable medium may be a machine-readable signal medium or a machine-readable storage medium. The machine readable medium may include, but are not limited to, electronic, magnetic, optical, electromagnetic, infrared, or semiconductor systems, devices or equipment, or any suitable combination of the above. More specific examples of the machine-readable storage medium may include an electrical connection based on one or more lines, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above.

In order to provide interaction with the user, the systems and technologies described herein may be implemented on a computer that has a display apparatus (e.g., a cathode ray tube (CRT) or a liquid crystal display (LCD) monitor) for displaying information to the user and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and it is capable of receiving input from the user in any form (including acoustic input, voice input, or tactile input).

The systems and technologies described herein may be implemented in a computing system that includes a back-end component (e.g., as a data server), a computing system that includes a middleware component (e.g., as an application server), a computing system that includes a front-end component (e.g., as a user computer with a graphical user interface or web browser through which the user may interact with the implementation of the systems and technologies described herein), or a computing system that includes any combination of the back-end component, the middleware component, or the front-end component. The components of the system may be connected each other through any form or kind of digital data communication (e.g., a communication network). Examples of the communication network include a local area network (LAN), a wide area network (WAN), and Internet.

A computer system may include a client and a server. The client and the server are generally far away from each other and usually interact through a communication network. The server may also be a server of a distributed system or a server combined with a block chain, and the relationship between the client and the server is generated through computer programs performed on a corresponding computer and having a client-server relationship with each other.

It should be understood that various forms of processes shown above may be used to reorder, add or delete steps. For example, steps described in the present disclosure may be executed in parallel, sequentially, or in a different order, as long as the desired result of the technical solution disclosed in the present disclosure may be achieved, but is not limited herein.

The foregoing specific implementations do not constitute a limitation to the protection scope of the present disclosure. Those having ordinary skill in the art should understand that various modifications, combinations, sub-combinations and substitutions may be made according to design requirements and other factors. Any modification, equivalent replacement and improvement made within the principle of the present disclosure should be included in the protection scope of the present disclosure.

## Claims

1. An on-board data processing method, **characterized by** comprising:
comparing (S201) collected user behavior data with on-board data, to obtain difference data used to characterize scene data that is related to user behavior and not included in the on-board data;
reporting (S202) the difference data; and
updating (S203) the on-board data by using a downloaded data package obtained through the difference data, in response to a data update operation.

2. The method of claim 1, wherein comparing (S201) the collected user behavior data with the on-board data to obtain the difference data, comprises:
making a decision based on the on-board data, in a vehicle driving state, to obtain first decision data;
collecting first user behavior data, in a case of it is recognized that, in the vehicle driving state, there is an obstacle around a vehicle; and
determining the first user behavior data and/or data associated with the first user behavior data as the difference data, in a case of it is determined by comparison that the first user behavior data does not match the first decision data.

3. The method of claim 1, wherein comparing (S201) the collected user behavior data with the on-board data to obtain the difference data, comprises:
making a decision based on the on-board data, in an autonomous parking state, to obtain second decision data;
collecting second user behavior data, in a case of it is recognized that, in the autonomous parking state, there is a parking space; and
determining the second user behavior data and/or data associated with the second user behavior data as the difference data, in a case of it is determined by comparison that the second user behavior data does not match the second decision data.

4. The method of any one of claims 1 to 3, wherein reporting (S202) the difference data, comprises:
deleting information used to identify user and/or vehicle identity from the difference data, to obtain target data, and uploading the target data; or
deleting information used to identify user and/or vehicle identity from the difference data and encrypting the difference data after the deleting, to obtain target data, and uploading the target data.

5. The method of any one of claims 1 to 3, further comprising:
receiving user prompt information, in a case of an updated model is obtained by performing model training based on the difference data; and
triggering the data update operation according to the user prompt information.

6. The method of claim 5, wherein updating (S203) the on-board data by using the downloaded data package obtained through the difference data, in response to the data update operation, comprises:
loading the updated model to obtain updated data and updating the on-board data based on the updated data, in a case of the downloaded data package is the updated model; or
updating, in a case of the downloaded data package is updated data obtained based on the updated model, the on-board data based on the updated data.

7. An on-board data processing device (400), **characterized by** comprising:
a comparing unit (401) configured to compare collected user behavior data with on-board data, to obtain difference data used to characterize scene data that is related to user behavior and not included in the on-board data;
a reporting unit (402) configured to report the difference data; and
a data updating unit (403) configured to update the on-board data by using a downloaded data packet obtained through the difference data, in response to a data update operation.

8. The device of claim 7, wherein the comparing unit (401) is further configured to:
make a decision based on the on-board data, in a vehicle driving state, to obtain first decision data;
collect first user behavior data, in a case of it is recognized that, in the vehicle driving state, there is an obstacle around a vehicle; and
determine the first user behavior data and/or data associated with the first user behavior data as the difference data, in a case of it is determined by comparison that the first user behavior data does not match the first decision data.

9. The device of claim 7, wherein the comparing unit (401) is further configured to:
make a decision based on the on-board data, in an autonomous parking state, to obtain second decision data;
collect second user behavior data, in a case of it is recognized that, in the autonomous parking state, there is a parking space; and
determine the second user behavior data and/or the data associated with the second user behavior data as the difference data, in a case of it is determined by comparison that the second user behavior data does not match the second decision data.

10. The device of any one of claims 7 to 9, wherein the reporting unit (402) is further configured to:
delete information used to identify user and/or vehicle identity from the difference data, to obtain target data, and upload the target data; or
delete information used to identify user and/or vehicle identity from the difference data and encrypt the difference data after the deleting, to obtain target data, and upload the target data.

11. The device of any one of claims 7 to 9, further comprising an information receiving unit configured to:
receive user prompt information, in a case of an updated model is obtained by performing model training based on the difference data; and
trigger the data update operation according to the user prompt information.

12. The device of claim 11, wherein the data updating unit (403) is further configured to:
load the updated model to obtain updated data and update the on-board data based on the updated data, in a case of the downloaded data package is the updated model; or
update, in a case of the downloaded data package is updated data obtained based on the updated model, the on-board data based on the updated data.

13. An electronic device (500), comprising:
at least one processor; and
a memory connected in communication with the at least one processor,
wherein the memory stores instructions executable by the at least one processor, and the instructions are executed by the at least one processor to enable the at least one processor to execute the method of any one of claims 1 to 6.

14. A non-transitory computer-readable storage medium storing computer instructions thereon, wherein the computer instructions are used to enable a computer to execute the method of any one of claims 1 to 6.

15. A computer program product comprising a computer program, wherein the computer program implements the method of any one of claims 1 to 6 when executed by a processor.
